# EUROPEAN PATENT APPLICATION

(11) **EP 1 085 753 A1**
(43) Date of publication of application: **21.03.2001**
(21) Application number: 99117496.2
(22) Date of filing: 13.09.1999
(51) Int. Cl.: H04N 5/64, F16M 11/16, F16M 11/12, G06F 1/16

(54) **Electronic data display device**

(71) Applicant: Inventec Corporation, Shih-Lin District, Tapei (TW)
(72) Inventor: Yu, Yiu-Ching, Shih-Lin District, Taipei (TW)
(74) Representative: Beetz & Partner Patentanwälte

(57) **Abstract**

This invention relates to an electric picture frame for showing static digital images data obtained from a digital image apparatus such as a digital camera or a computer. The electric picture frame comprises a liquid crystal display (LCD), a strut unit, a control circuit unit, wherein the liquid crystal display is used to show the static digital images data, and the strut unit comprising a base and a movable apparatus is used to adjust the height, elevation angle, rotation angle, and view direction of the LCD, and the control circuit unit comprising a memory and a microprocessor is not only used to replace the digital images in accordance with demands, but also has many display functions, e.g. display several images simultaneously or sequentially. Moreover, if the electric picture frame is equipped with a microphone and a trumpet, it will be able to attach sound fragments to the images and have the functions of alarm and clock.

## Description

### BACKGROUND OF THE INVENTION

### Field of the invention

The present invention relates to an electric picture frame, and particularly to an image display apparatus used as a picture frame, for showing static digital images data obtained from a digital image apparatus such as a digital camera or a computer by using a liquid crystal display.

### Related Art

One conventional method for showing images or photographs can be described as follows. By using a camera or a similar apparatus, the captured images can be processed and printed on paper, and then showed by using a picture frame or a similar strut apparatus. The method described above will take much time and steps to get images for showing, and the strut apparatus needs to be broken up and then assemble again while replacing the images or photographs. In comparison with the conventional paper images, the digital images have the characteristic features of being able to be easily edited, stored, and transmitted, and consequently can be more convenient used in many different ways.

Nowadays, while the technology developing rapidly and the information growing explosively, the computer and the network have been essentials for our living. By using the computer, people can not only process, edit, and store the data, but also transmit and control the data via the network. They can also be used in many different ways while having the advantages of high speed and low cost. Therefore, the communication equipment such as the telephone and the television will be changed to the digital system, and the electric home appliances will also be connected to the computer and the network to make our living more convenient and plentiful.

Among all of the digitized electric appliances. The digital camera has been heavily developed and widely used. Because of the continuous progress in the digital camera technology, the resolution has been greatly improved, and the storage capacity has also been greatly increased by the outstanding progress in the image compression technology. Furthermore, the digital camera can be directly connected to the computer so as to modify, rearrange, and edit the stored data and then transmit via the network. Accordingly, the capability of the digital camera has greatly surpassed that of the conventional camera or similar apparatus.

Nevertheless, although the digital images have the advantages of being able to be easily edited and transmitted, moreover, having the figure of arbitrarily rewrittable so as to save the consumption of paper, but they can only be showed on the computer display . In comparison with the conventional photographs, which can be placed in the picture frame or on the wall, there is no such frame-like apparatus can be used to show the digital images without the computer. Nowadays, the most commonly used method to show the digital images in the frame or on the wall is to print them on the paper. But such method will cost too much and lose the advantages mentioned above.

As described above, it is well known that it is inconvenient to show the digital images without using a computer, furthermore, the conventional picture frame cannot make use of all the advantages of the digital images.

### OBJECT AND BRIEF DESCRIPTION OF THE INVENTION

Therefore, the primary object of the present invention is to provide an electric picture frame, by which users can show the static digital images data obtained from the digital camera. Besides the photographs obtained from the digital camera, all the static digital images data obtained from the internet and other digital image apparatus can also be showed by the electric picture frame according to the present invention.

Accordingly, the digital images may be obtained from many different sources, and it is very convenient to replace them on the display. Moreover, the software of the electric picture frame can be upgraded to improve the display capability, e.g. display several images simultaneously or sequentially. And if the electric picture frame is equipped with a microphone and a trumpet, it will be able to attach sound fragments to the images and have the functions of alarm and clock.

To achieve the object mentioned above, the electric picture frame according to the present invention comprises a liquid crystal display (LCD) for showing desired static digital images data, a strut unit for supporting the liquid crystal display, and a control circuit unit for receiving the static digital images data obtained from a digital camera or other digital image apparatus such as a computer and driving the liquid crystal display to show such images data. Wherein the control circuit unit also comprises a microphone and a trumpet for recording and playing the sound fragments.

Further scope of applicability of the present invention will become apparent from the detailed description given hereinafter. However, it should be understood that the detailed description and specific examples, while indicating preferred embodiments of the invention, are given by way of illustration only, since various changes and modifications within the spirit and scope of the invention will become apparent to those skilled in the art from this detailed description.

### BRIEF DESCRIPTION OF THE DRAWINGS

The present invention will become more fully understood from the detailed description given hereinbelow illustration only, and thus are not limitative of the present invention, and wherein:
FIG. 1 discloses a front view of an embodiment of the electric picture frame according to the present invention;
FIG. 2 discloses another front view of an embodiment of the electric picture frame according to the present invention;
FIG. 3 discloses a further front view of an embodiment of the electric picture frame according to the present invention;
FIG. 4 is a decomposition diagram of an embodiment of the electric picture frame according to the present invention;
FIG. 5 is a decomposition diagram of another embodiment of the electric picture frame according to the present invention; and
FIG. 6 shows the block diagram of the control circuit unit of the electric picture frame according to the present invention.

### DETAILED DESCRIPTION OF THE INVENTION

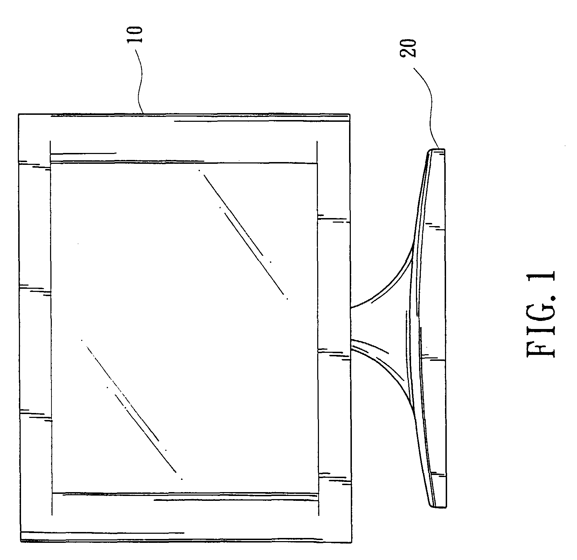

With reference to FIG. 1, FIG. 2, and FIG. 3, the electric picture frame according to the present invention comprises a liquid crystal display 10 for showing desired static digital images data, a strut unit 20 for supporting the liquid crystal display 10, and a control circuit unit 30 embedded within the liquid crystal display 10 for receiving the static digital images data obtained from a digital camera or other digital image apparatus such as a computer and driving the liquid crystal display 10 to show images.

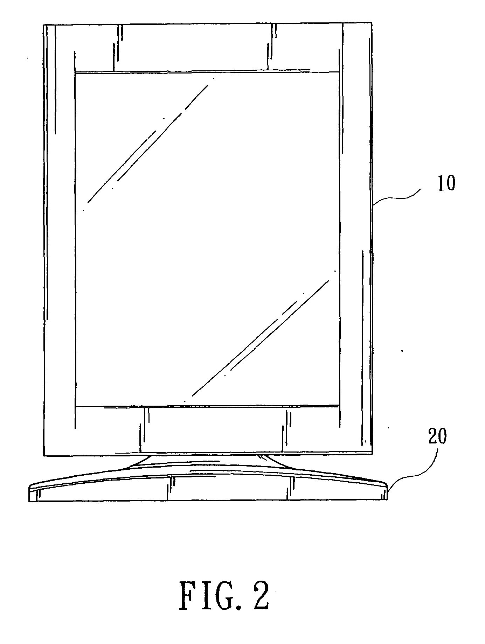

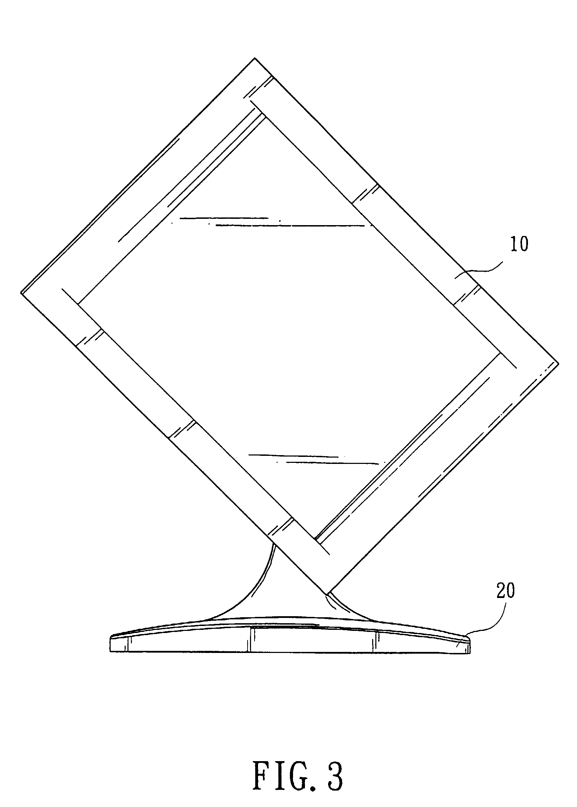

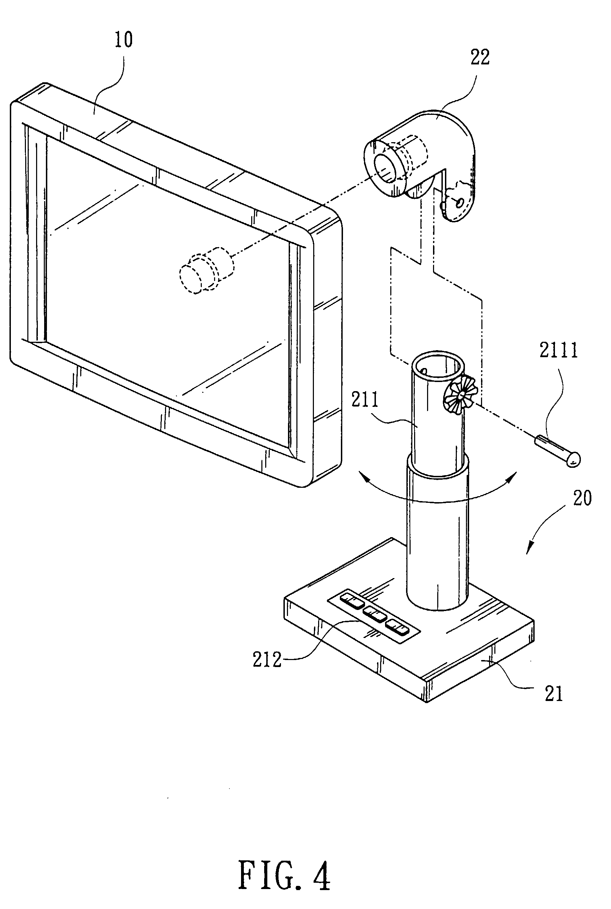

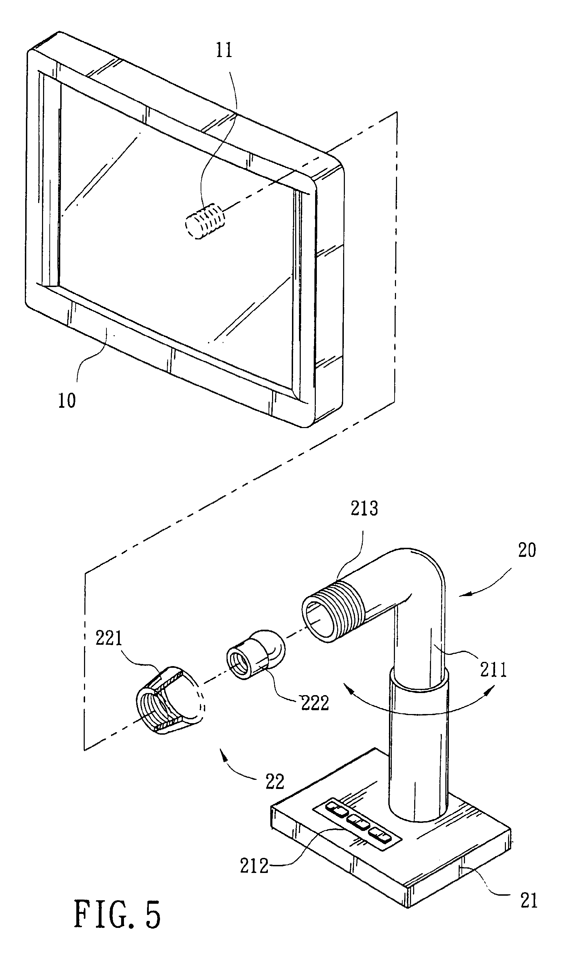

With reference to FIG. 4, the strut unit 20 comprises a base 21, which has an extensible tube 211 and a control panel 212, wherein the extensible tube 211 is attached to the base 21, which is capable of rotating around the base 21 for adjusting the height and the view direction of the liquid crystal display 10, and the control panel 212 has at least one key for instructing the operation of the control circuit unit 30. The strut unit 20 also comprises a movable portion 22, which is used to connect the extensible tube 211 and the liquid crystal display 10, for adjusting the elevation angle and the rotation angle of the liquid crystal display 10, wherein the movable portion 22 is attached to a radial teeth 2112 of the extensible tube 211 by using a plug 2111 so that the movable portion 22 can swing around the joint to adjust the elevation angle of the liquid crystal display 10 from 45 degrees to 90 degrees. The liquid crystal display 10 is connected to the movable portion 22 by using an axle so that the liquid crystal display 10 can freely rotate around the axle. As shown in FIG. 1 and FIG. 2, if the desired static digital images data is preferable to be shown in transverse direction, then the liquid crystal display 10 can be rotated to transverse direction, and similarly if the static digital images data is preferable to be shown in vertical direction, then the liquid crystal display 10 can be rotated to vertical direction. Moreover, as shown in FIG. 3, the liquid crystal display 10 can also be rotated to 60 degrees or 120 degrees for showing the images on a slant. Furthermore, as shown in FIG. 5, the movable portion 22 may be a spherical joint comprising a screw nut 221 and a connector 222, wherein the spherical end of the connector 222 is covered by the screw nut 221 and attached to a tube 213 of the base 21 by using the screw nut 221. The cylindrical end of the connector 222 can be pierced through the screw nut 221 and connect to a screw bolt 11 protruding from the backside of the liquid crystal display 10. Therefore, the liquid crystal display 10 can rotate around the joint of the connector 222 and the tube 213 to arbitrarily adjust the elevation angle, the view direction, and the rotation angle of the liquid crystal display 10.

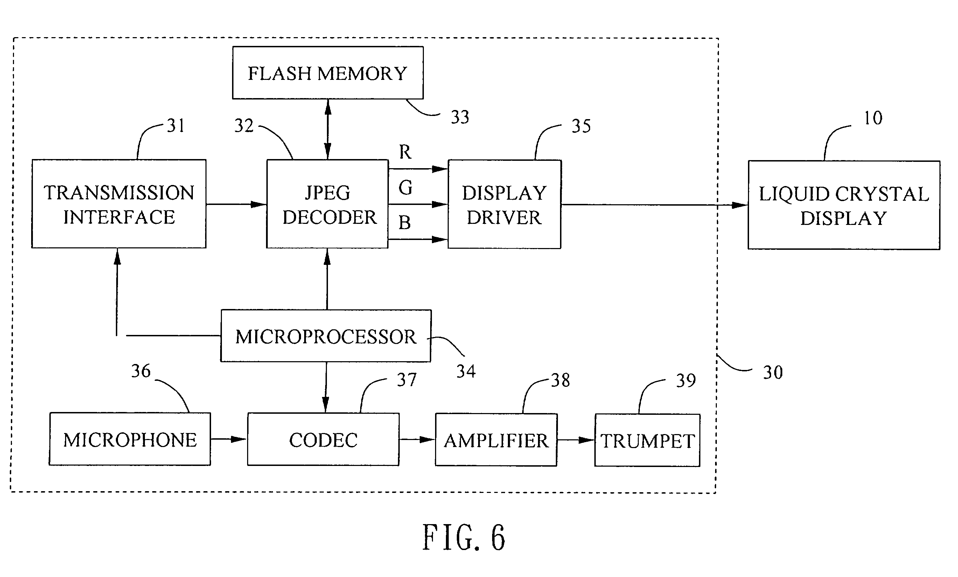

The graph shown in FIG. 6 is the block diagram of the control circuit unit 30 of the electric picture frame according to the present invention, which comprises a transmission interface 31, which may be a slot of RS232, USB, PCMCIA, MO, or flash card, for receiving the static digital images data obtained from a digital camera or other digital image apparatus such as a computer, and a decoder, which in the preferred embodiment is a JPEG decoder 32, for converting the received static digital images data to RGB format data, and a memory, which in the preferred embodiment is a flash memory 33, for storing the RGB format data decoded by the JPEG decoder 32, and a microprocessor 34 for controlling the transmission interface 31 and the JPEG decoder 32 to receive and decode the static digital images data, and a display driver 35, which can drive the liquid crystal display 10 to visualize the RGB format data.

When users want to use the electric picture frame according to the present invention for showing static digital images data, they can use the slot of RS232, USB, PCMCIA, MO or flash card to obtain the static digital images data. While the microprocessor 34 detecting that there has been static digital images data appearing on the transmission interface 31, it will instruct the JPEG decoder 32 to decode such images data, and then the decoded static digital images data will be stored into the flash memory 33 so that such decoded images data can be replaced arbitrarily. Therefore, users can arbitrarily select the desired static digital images data by using the control panel 212, and according to the selection of users, the microprocessor 34 will then instruct the JPEG decoder 32 to decode the corresponding RGB format data and output to the display driver 35, by which the liquid crystal display 10 can be driven for showing.

With reference to FIG. 6, the control circuit unit 30 also comprises a microphone 36 for recording sound fragments, a codec (encoder/decoder) 37, which is controlled by the microprocessor 34 and connected to the microphone 36, for encoding/decoding the recorded sound fragments, a amplifier 38 for amplifying the decoded sound fragments from the codec 37, and a trumpet 39 for playing the amplified sound fragments from the amplifier 38.

By using the microphone 36, users can record sound fragments relating to the static digital images such as description or background music and encode them by the codec 37 for storage. After selecting the desired static digital images data, the microprocessor 34 will instruct the codec 37 to decode the sound fragments relating to such images. The decoded sound fragments will then be amplified by the amplifier 38 and played by the trumpet 39. Furthermore, the control circuit unit 30 may also have the functions of alarm and clock. By using the control panel 212, users can set the time and the tinkle of the alarm. When the setup time is reached, the microprocessor 34 will instruct the codec 37 to decode the setup tinkle and play it by the amplifier 38 and the trumpet 39.

The invention being thus described, it will be obvious that the same may be varied in many ways. Such variations are not to be regarded as a departure from the spirit and scope of the invention, and all such modifications as would be obvious to one skilled in the art are intended to be included within the scope of the following claims.

## Claims

1. An electric picture frame for showing static digital images data obtained from a digital image apparatus such as a digital camera or a computer, comprising:
a liquid crystal display for showing the static digital images data;
a strut unit for supporting the liquid crystal display; and
a control circuit unit, which is embedded within the liquid crystal display, for receiving the static digital images data and driving the liquid crystal display to visualize such images data.

2. The electric picture frame of claim 1 wherein the strut unit comprises a base and a movable portion which is used to connect the base and the liquid crystal display for controlling the elevation angle and the rotation angle of the liquid crystal display.

3. The electric picture frame of claim 1 wherein the liquid crystal display comprises an axle, which is used to connected the liquid crystal display to the movable portion.

4. The electric picture frame of claim 2 wherein the base comprises an extensible tube, in which one end is attached to the base and the other end is connected to the movable portion, for adjusting the height and the view direction of the liquid crystal display.

5. The electric picture frame of claim 4 wherein the extensible tube comprises a radial teeth, which is used to connected the movable portion to the base.

6. The electric picture frame of claim 2 wherein the movable portion is a spherical joint.

7. The electric picture frame of claim 1 wherein the control circuit unit comprises:
a transmission interface for receiving the static digital images data;
a decoder for converting the received static digital images data to RGB format data;
a memory for storing the RGB format data decoded by the decoder;
a microprocessor for controlling the transmission interface and the decoder to receive and decode the static digital images data; and
a display driver for driving the liquid crystal display to visualize the RGB format data.

8. The electric picture frame of claim 7 wherein the transmission interface is a RS232 slot or a USB slot.

9. The electric picture frame of claim 7 wherein the transmission interface is a PCMCIA slot a flash card slot or a MO slot.

10. The electric picture frame of claim 7 wherein the decoder is a JPEG decoder.

11. The electric picture frame of claim 7 wherein the memory is a flash memory.

12. The electric picture frame of claim 7 wherein the control circuit unit further comprises:
a microphone for recording sound fragments;
a codec, which is connected to the microphone, for encoding/decoding the sound fragments;
an amplifier for amplifying the sound fragments decoded by the encoder/decoder; and
a trumpet for playing the sound fragments amplified by the amplifier.

13. The electric picture frame of claim 12 wherein the codec is connected to the microprocessor, and by using the microprocessor, the codec can be controlled to encode/decode the sound fragments.

14. An electric picture frame for showing static digital images data obtained from a digital image apparatus such as a digital camera or a computer, comprising:
a liquid crystal display for showing the static digital images data;
a base for supporting the liquid crystal display;
a movable portion, which is used to connect the liquid crystal display and the base for controlling the elevation angle and the rotation angle of the liquid crystal display; and
a control circuit unit, which is embedded within the liquid crystal display, for receiving the static digital images data and driving the liquid crystal display to visualize such images data.

15. The electric picture frame of claim 14 further comprises a extensible tube, in which one end is attached to the base and the other end is connected to the movable portion, for adjusting the height and the view direction of the liquid crystal display.

16. The electric picture frame of claim 14 wherein the liquid crystal display comprises an axle, which is used to connected the liquid crystal display to the movable portion.

17. The electric picture frame of claim 15 wherein the extensible tube comprises a radial teeth, which is used to connected the movable portion to the base.

18. The electric picture frame of claim 14 wherein the movable portion is a spherical joint.

19. The electric picture frame of claim 14 wherein the control circuit unit comprises:
a transmission interface for receiving the static digital images data;
a decoder for converting the received static digital images data to RGB format data;
a memory for storing the RGB format data decoded by the decoder;
a microprocessor for controlling the transmission interface and the decoder to receive and decode the static digital images data; and
a display driver for driving the liquid crystal display to visualize the RGB format data.

20. The electric picture frame of claim 18 wherein the control circuit unit further comprises:
a microphone for recording sound fragments;
a codec, which is connected to the microphone, for encoding/decoding the sound fragments;
an amplifier for amplifying the sound fragments decoded by the encoder/decoder; and
a trumpet for playing the sound fragments amplified by the amplifier.
